**Europäisches Patentamt**

**European Patent Office**

**Office européen des brevets**

(11) Veröffentlichungsnummer:

**0 032 558**
**A2**

(12) **EUROPÄISCHE PATENTANMELDUNG**

(21) Anmeldenummer: 80107830.4

(22) Anmeldetag: 11.12.80

(51) Int. Cl.³: **G 05 B 19/10**

(30) Priorität: 27.12.79 DE 2952500

(43) Veröffentlichungstag der Anmeldung: 29.07.81
Patentblatt 81/30

(84) Benannte Vertragsstaaten: **AT BE FR GB IT SE**

(71) Anmelder: **SIEMENS AKTIENGESELLSCHAFT Berlin
und München, Postfach 22 02 61,
D-8000 München 22 (DE)**

(72) Erfinder: **Dannhäuser, Friedrich, Dr.-techn.,
Freischützstrasse 17, D-8000 München 81 (DE)**
Erfinder: **Hagedorn, Horst, Dipl.-Astr., Zweigstrasse 18,
D-8031 Gröbenzell (DE)**
Erfinder: **Preissinger, Heinz, Dipl.-Phys., Enzianring 115,
D-8028 Taufkirchen (DE)**
Erfinder: **Müller, Rüdiger, Dr.-Ing.,
Putzbrunnerstrasse 131, D-8000 München 83 (DE)**

(54) **Steuereinheit in einer Vorrichtung zur Steuerung und/oder Regelung von Maschinen.**

(57) Die Erfindung betrifft eine Steuereinheit in einer Vorrichtung zur Steuerung und/oder Regelung von Maschinen. Die Steuereinheit besteht aus einem Mikrocomputer ($\mu$C), einem Programmspeicher (1), einem Datenspeicher (2), wobei Programm- (1), und Datenspeicher (2) mittels eines Adreßbusses (4) und eines Datenbusses (3) mit dem Mikrocomputer ($\mu$C) verbunden sind. Der Datenspeicher (2) ist in einzelne Abschnitte unterteilbar, welche die Parameter einzelner der Steuerung und/oder Regelung dienender Sensoren enthalten. Ferner weist die Steuereinheit einen Auswahlschalter (5) auf, welcher zur Ansteuerung der einzelnen Abschnitte des Datenspeichers (2) dient. Die Erfindung eignet sich insbesondere zur Steuerung und/oder Regelung der Autoelektronik.

SIEMENS AKTIENGESELLSCHAFT
Berlin und München

Unser Zeichen
VPA 79 P 1 2 0 2 E

0032558

Steuereinheit in einer Vorrichtung zur Steuerung
und/oder Regelung von Maschinen

Die Erfindung betrifft eine Steuereinheit in einer Vorrichtung zur Steuerung und/oder Regelung von Maschinen
mit einem Mikrocomputer, einem Programm- und einem Datenspeicher, die mittels eines Adreß- und Datenbusses
mit dem Mikrocomputer verbunden sind.

Derartige Steuereinheiten werden in zunehmendem Maße
zur Steuerung und/oder Regelung von Maschinen verschiedenster Art, beispielsweise in der Autoelektronik, der
Haushaltselektronik, in der Werkzeugmaschinentechnik,
angewendet. Zur Optimierung der Steuerungs- bzw. Regelungsprozesse erweist sich die sogenannte flexible Software als sehr geeignet. Dabei würde ein- und dasselbe
Steuerprogramm für eine Reihe gleichartiger Maschinen
ausreichen, wenn die Eingangsgrößen der Sensoren sich
nicht unterscheiden würden. Z.B. genügt für eine Temperaturregelung oft das gleiche Steuerprogramm. Wenn
jedoch Temperatursensoren mit verschiedener Charakteristik verwendet werden, müssen numerisch andere Zahlenwerte, z.B. in Tabellenform, im Programmspeicher stehen.
Dies erfordert eine große Typenvielfalt maskenprogrammierter Speicher oder die Verwendung von teuren programmierbaren Speichern. Für den Service bedeutet dies eine
große Lagerhaltung oder die Investition für die Geräte
zum Programmieren der Speicher (PROM) an Ort und Stelle.

Sac 1 Pj
20.12.1979

Bisher war deshalb ein großer Lageraufwand für diese
Typenvielfalt notwendig, wobei dieser Aufwand für verschiedene austauschbare Speicherbausteine bzw. austauschbare Platinen erforderlich war.

Aufgabe der Erfindung ist es daher, eine Steuereinheit
der eingangs genannten Art anzugeben, mit welcher die
genannten Schwierigkeiten umgangen werden.

Diese Aufgabe wird bei einer Steuereinheit der eingangs
genannten Art erfindungsgemäß dadurch gelöst, daß sie
einen in einzelne Abschnitte unterteilbaren Datenspeicher besitzt, daß in den einzelnen Abschnitten Parameter
einzelner der Steuerung und/oder Regelung dienender Sensoren gespeichert sind, und daß sie einen Auswahlschalter aufweist, welcher zur Ansteuerung der einzelnen
Abschnitte des Datenspeichers dient.

Eine Weiterbildung der Erfindung besteht darin, daß in
einzelnen Abschnitten des unterteilbaren Speichers Programmpassagen zur Durchführung der Regelung und/oder
Steuerung gespeichert sind.

Eine zweckmäßige Ausgestaltung sieht vor, daß der Programm- und der unterteilbare Datenspeicher in einem
Baustein angeordnet sind. Vorteilhafterweise ist dabei
ein Multiplexer in den Adreßbus zwischen den Mikrocomputer und den Speicher geschaltet und der Auswahlschalter am Multiplexer angeordnet.

Die Vorteile des Gegenstandes der Erfindung werden an
Hand der folgenden Ausführungsbeispiele aufgezeigt.

In der dazugehörenden Zeichnung zeigen:

Fig. 1 ein Ausführungsbeispiel mit getrenntem Programm- und Datenspeicher,

Fig. 2 ein Ausführungsbeispiel, bei dem Programm- und Datenspeicher in einem Baustein angeordnet sind,

Fig. 3 eine Ansteuerung des Datenspeichers und

Fig. 4 ein weiteres Ausführungsbeispiel mit getrenntem Programm- und Datenspeicher.

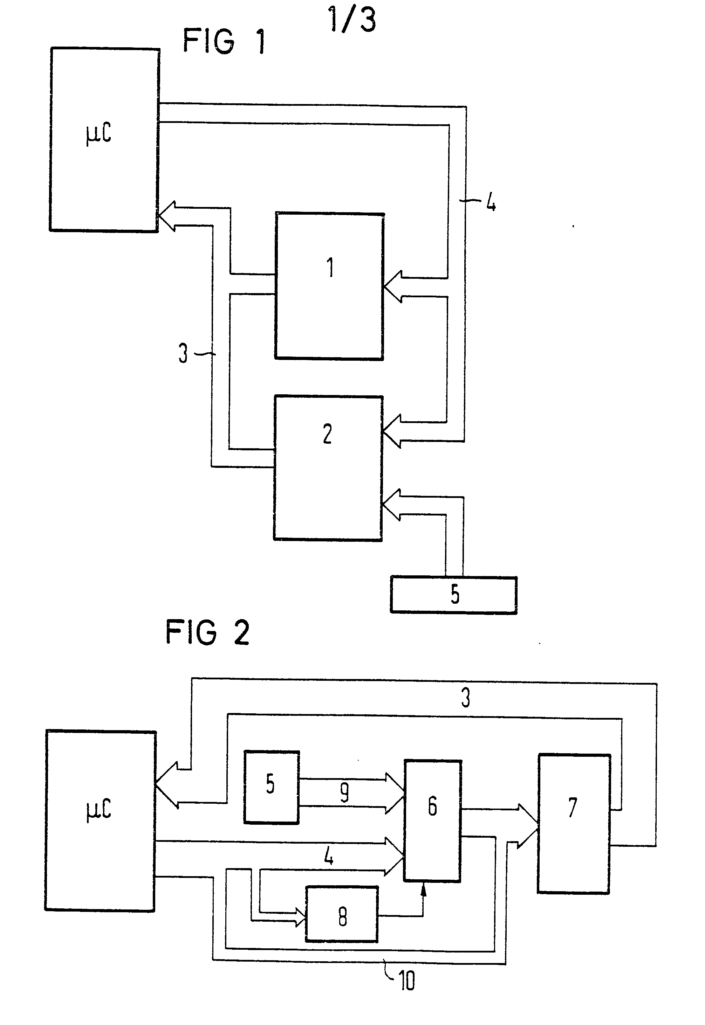

In der Fig. 1 ist ein Blockschaltbild einer Ausführungsform der Steuereinheit nach der Erfindung dargestellt. Die Steuereinheit enthält einen Programmspeicher 1 sowie einen Datenspeicher 2, die beide mittels eines Datenbusses 3 sowie eines Adreßbusses 4 mit dem Mikrocomputer µC verbunden sind. Am Datenspeicher 2 ist ein Auswahlschalter 5 angeordnet.

Der Datenspeicher 2 enthält die Parameter der verschiedenen Sensor-Variationen und gegebenenfalls auch spezifische Programmpassagen. Der Datenspeicher 2 ist dabei in eine geeignete Zahl von Abschnitten unterteilt, welche durch einstellbare verschiedene Bitmuster über den Auswahlschalter 5 angewählt werden. Derartige Auswahlschalter 5 können beim Service einfach auf die jeweilige Variante eingestellt werden.

In Fig. 2 ist eine weitere Ausführungsform einer erfindungsgemäßen Steuereinheit dargestellt, bei welcher Programm- und Datenspeicher in einem einzigen Speicherbaustein 7 angeordnet sind. Dabei ist ein Multiplexer 6 in den Adreßbus 4 zwischen dem Mikrocomputer µC und dem Speicher 7 geschaltet. Der Multiplexer 6 legt den Adreßeingang des Speichers entweder auf den Adreßbus des Mikrocomputers /uC oder auf die Adreßleitungen 9 des Auswahlschalters 5, je nachdem ob ein Programm oder typische Daten gelesen werden sollen. Dabei genügt es, über den Multiplexer 6 nur die Adreßleitungen 4 zu führen, die vom Auswahlschalter 5 bedient werden. Die übrigen Leitungen 10 werden direkt vom Mikrocomputer /uC zum Adreßlatch des Speichers 7 geführt.

Der Multiplexer 6 wird von einem Decoder 8 gesteuert, der die obersten Adreßbits benutzt, um den Multiplexer 6 auf den Mikrocomputer /uC oder den Auswahlschalter 5 zu schalten.

Der Speicherbaustein 7 enthält dabei Abschnitte, die das Steuerprogramm enthalten und weitere Abschnitte, in welchen die Daten für die einzelnen Varianten angeordnet sind. Die Aufteilung Programmspeicher/Datenspeicher ist beispielsweise in Teilen $1/2^n$ des Gesamtinhalts des Speichers 7 oder einem Mehrfachen davon möglich (n=0, 1, 2.......).

An Hand der folgenden Ausführungsbeispiele soll das Prinzip der Speicherunterteilung näher erläutert werden.

Ausführungsbeispiel 1:
Ein $2^6$ = 64 Byte-Speicher soll in zwei Abschnitte zu je 32 Byte unterteilt werden.

Dabei wird ein Bitmuster der Adreßleitungen gemäß der folgenden Tabelle 1 ausgewählt.

0032558

## Tabelle 1

```
                        Bitmuster
                     der Adreßleitungen
                     A5 A4 A3 A2 A1 A0
Auswahl für
Abschnitt 1:         0  x  x  x  x  x
           2:        1  x  x  x  x  x
```

Die Adreßleitung A5 wird mit Hilfe eines einfachen Schalters auf "0" oder "1" gelegt und damit der Adreßbereich in zwei Teile geteilt. An den mit A4 bis A0 adressierten Stellen stehen die Parameter des jeweils ausgewählten Sensors (z.B. Temperaturtabelle) oder ein spezifisches Programm. Die einzelnen Abschnitte können dabei maximal je 32 Byte umfassen.

Ausführungsbeispiel 2:
Ein Speicher von 256 Byte soll in vier Abschnitte zu je 64 Byte unterteilt werden. Das Bitmuster der Adreßleitungen ist der nachstehend aufgeführten Tabelle 2 zu entnehmen.

## Tabelle 2

```
                     Bitmuster der
                     Adreßleitungen
                     A6 A5 A4 A3 A2 A1 A0
Auswahl für
Abschnitt 1:         0  0  x  x  x  x  x
           2:        0  1  x  x  x  x  x
           3:        1  0  x  x  x  x  x
           4:        1  1  x  x  x  x  x
```

Die Adreßleitungen A6 und A5 ermöglichen die Auswahl
von vier Abschnitten. Die Leitungen A4 bis AO adressieren die spezifischen Parameter, welche jeweils bis zu
64 Byte umfassen können.

Ausführungsbeispiel 3:
Das Prinzip kann auf Speicher und Abschnitte beliebiger
Größe erweitert werden. Als weiteres Beispiel soll ein
Speicherbaustein mit zwei kByte in 32 Abschnitte unterteilt werden. Das Bitmuster für die Adreßleitungen ist
in der Tabelle 3 angegeben.

Tabelle 3

| Abschnitt | Adreßleitungen (2⁵=32 Abschnitte) | | | | | Speicherinhalt (2⁶=64 Byte) | | | | | |
|---|---|---|---|---|---|---|---|---|---|---|---|
| | A10 | A9 | A8 | A7 | A6 | A5 | A4 | A3 | A2 | A1 | A0 |
| 1 | 0 | 0 | 0 | 0 | 0 | x | x | x | x | x | x |
| 2 | 0 | 0 | 0 | 0 | 1 | x | x | x | x | x | x |
| 3 | 0 | 0 | 0 | 1 | 0 | x | x | x | x | x | x |
| 4 | 0 | 0 | 0 | 1 | 1 | x | x | x | x | x | x |
| 5 | 0 | 0 | 1 | 0 | 0 | x | x | x | x | x | x |
| 6 | 0 | 0 | 1 | 0 | 1 | x | x | x | x | x | x |
| 7 | 0 | 0 | 1 | 1 | 0 | x | x | x | x | x | x |
| 8 | 0 | 0 | 1 | 1 | 1 | x | x | x | x | x | x |
| 9 | 0 | 1 | 0 | 0 | 0 | x | x | x | x | x | x |
| 10 | 0 | 1 | 0 | 0 | 1 | x | x | x | x | x | x |
| 11 | 0 | 1 | 0 | 1 | 0 | x | x | x | x | x | x |
| 12 | 0 | 1 | 0 | 1 | 1 | x | x | x | x | x | x |
| 13 | 0 | 1 | 1 | 0 | 0 | x | x | x | x | x | x |
| 14 | 0 | 1 | 1 | 0 | 1 | x | x | x | x | x | x |
| 15 | 0 | 1 | 1 | 1 | 0 | x | x | x | x | x | x |
| 16 | 0 | 1 | 1 | 1 | 1 | x | x | x | x | x | x |
| 17 | 1 | 0 | 0 | 0 | 0 | x | x | x | x | x | x |
| 18 | 1 | 0 | 0 | 0 | 1 | x | x | x | x | x | x |
| 19 | 1 | 0 | 0 | 1 | 0 | x | x | x | x | x | x |
| 20 | 1 | 0 | 0 | 1 | 1 | x | x | x | x | x | x |
| 21 | 1 | 0 | 1 | 0 | 0 | x | x | x | x | x | x |
| 22 | 1 | 0 | 1 | 0 | 1 | x | x | x | x | x | x |
| 23 | 1 | 0 | 1 | 1 | 0 | x | x | x | x | x | x |
| 24 | 1 | 0 | 1 | 1 | 1 | x | x | x | x | x | x |
| 25 | 1 | 1 | 0 | 0 | 0 | x | x | x | x | x | x |
| 26 | 1 | 1 | 0 | 0 | 1 | x | x | x | x | x | x |
| 27 | 1 | 1 | 0 | 1 | 0 | x | x | x | x | x | x |
| 28 | 1 | 1 | 0 | 1 | 1 | x | x | x | x | x | x |
| 29 | 1 | 1 | 1 | 0 | 0 | x | x | x | x | x | x |
| 30 | 1 | 1 | 1 | 0 | 1 | x | x | x | x | x | x |
| 31 | 1 | 1 | 1 | 1 | 0 | x | x | x | x | x | x |
| 32 | 1 | 1 | 1 | 1 | 1 | x | x | x | x | x | x |

Der Tabelle 3 ist zu entnehmen, daß die oberen fünf Adreßleitungen A10, A9, A8, A7, A6 ($2^5$=32) durch Auswahlschalter in 32 Abschnitte codiert einstellbar sein müssen. Damit sind 32 Varianten bei gleichem Steuerprogramm realisierbar. Die unteren Adreßleitungen A5 bis A0 ($2^6$=64 Byte) können Parameter-Tabellen, Sensordaten, spezifische Programmpassagen bis zu je 64 Byte ansprechen.

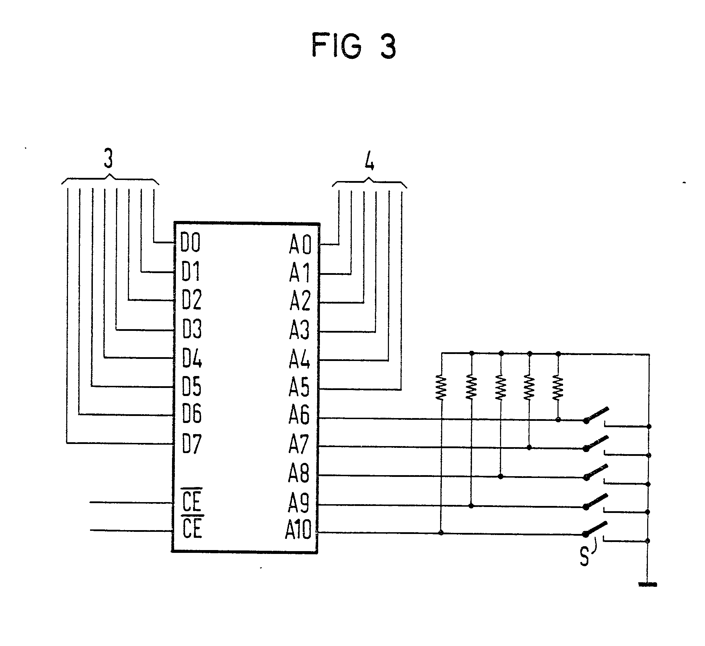

Ein Schaltbeispiel zur Ansteuerung ist in der Fig. 3 dargestellt. Durch die Adreßleitungen A10 bis A6 kann mit Hilfe des Schalters S entsprechend der Codierung ein bestimmter Abschnitt ausgewählt werden. Die Adreßleitungen A5 bis A0, die an den Adreßbus 4 angeschlossen sind, wählen die gewünschte Adresse innerhalb des gewählten Abschnittes an, in der z.B. Drehzahldaten der betreffenden Variante stehen. Die Ausgangsleitungen D0 bis D7 geben die Daten zur weiteren Verarbeitung über den Datenbus 3 an den Mikrocomputer. Mit den Leitungen $\overline{CE}$ bzw. $\overline{OE}$ wird der Speicherbaustein selbst bei Bedarf angesprochen bzw. die Ausgabe der gespeicherten Daten ermöglicht.

Im allgemeinen wird kein ganzer Speicher-Baustein zur Darstellung der Variantenvielfalt benötigt. Der Rest des Speichers läßt sich dann in einfacher Weise für die Speicherung des Steuerprogramms oder Teilen davon verwenden.

So können beispielsweise bei der Codierung des Auswahlschalters gemäß Tabelle 3 die Abschnitte 1 bis 24 (entsprechend 3/2 kByte) typische Daten, die Abschnitte 25 bis 32 (entsprechend 1/2 kByte) Programm enthalten. Zur Auswahl würde der Decoder, wenn A10 und A9 gleich 1 sind, den Multiplexer auf den Adreßbus des Prozessors, in allen anderen Fällen auf den Auswahlschalter schalten. Über den Multiplexer müßten die Adreßleitungen A6 bis A10 geführt werden.

Wenn sich in den Abschnitten 1 bis 26 Programme und in den Abschnitten 27 bis 32 typische Daten befinden, müßte der Decoder auf den Auswahlschalter schalten, wenn A10 und A9 gleich 1 und gleichzeitig A8 und A7 nicht beide $\emptyset$ sind. Über den Multiplexer müßten auch in diesem Fall die Adreßleitungen A6 bis A10 geführt werden.

Dies letzte Beispiel zeigt, daß nicht nur $1/2^n$tel des Gesamtspeichers abgetrennt werden kann, sondern auch ein vielfaches von $1/2^n$. In allen Fällen ist der Decoder auf den speziellen Fall abzustimmen.

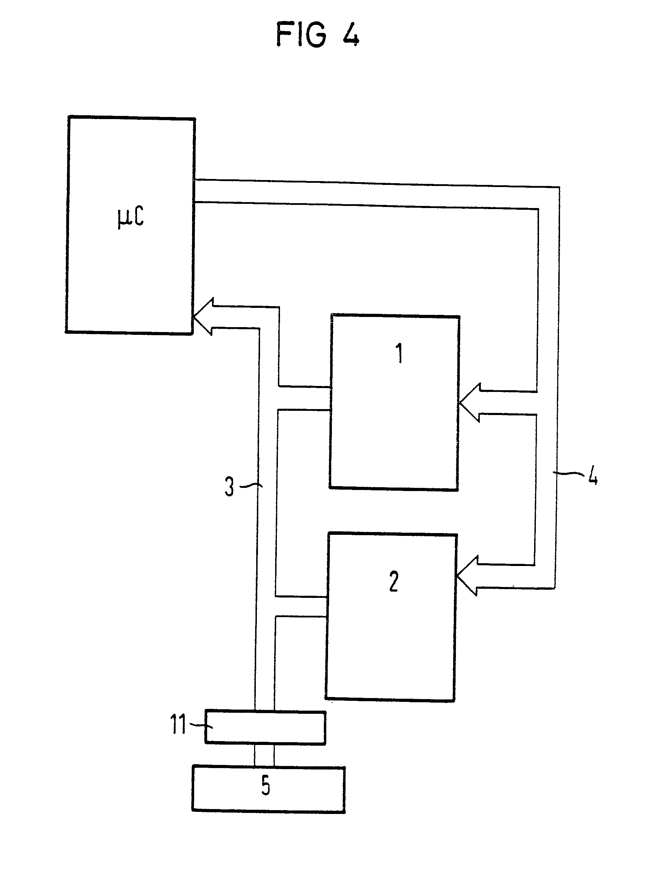

In Fig. 4 ist ein weiteres Ausführungsbeispiel dargestellt, in welchem ein Programmspeicher 1 sowie ein Datenspeicher 2 über Daten- 3 und Adreßbus 4 mit einem Mikrocomputer /uC verbunden sind. Der Auswahlschalter 5 ist über einen Treiber (tristate) an den Datenbus 3 angeschaltet. Das Bitmuster des Auswahlschalters 5 wird über den Datenbus 3 oder Ein-/Ausgabeleitungen eingelesen. Die Information wird dazu benutzt, die entsprechenden Speicheradressen softwaremäßig anzuwählen. Die unterschiedlichen Parameter einer Variante brauchen dann nicht mehr zusammen in einem Abschnitt zu liegen. Eine Variante läßt sich aus verschiedenen Abschnitten kombinieren. Durch die Kombinationsmöglichkeit verringert sich die Zahl der Abschnitte, da jeder Parameter für verschiedene Typen verwendet werden kann.

Der Unterschied der beiden Fälle - Bitmuster des Auswahlschalters an den Adreßeingängen des Speichers gemäß den Figuren 1 und 2 sowie Bitmuster über den Datenbus eingelesen gemäß Fig. 4 - sei an einem Beispiel erläutert: Im ersten Fall befinden sich Parameterwerte einer Type in einem Abschnitt, also Werte verschiedenartiger Sensoren (z.B. Temperaturfühler, Radsensordaten usw.). Im zweiten Fall enthält ein Speicherabschnitt die Daten gleichartiger Sensoren (z.B. Tabellen einiger unterschiedlicher Temperaturfühler). Das vom Auswahlschalter eingelesene Bitmuster wird so verarbeitet, daß für eine Type jeweils die richtige Tabelle innerhalb des Abschnitts gleichartiger Sensoren ausgewählt wird.

Die erfindungsgemäße Steuereinheit eignet sich beispielsweise zum Einsatz in einem Bordcomputer für Kraftfahrzeuge. Die Speicher sind dabei vorzugsweise als ROM ausgeführt.

5 Patentansprüche,
4 Figuren.

0032558

Patentansprüche

1. Steuereinheit in einer Vorrichtung zur Steuerung und/oder Regelung von Maschinen mit einem Mikrocomputer, einem Programm- und einem Datenspeicher, die mittels eines Adreß- und Datenbusses mit dem Mikrocomputer verbunden sind, d a d u r c h  g e k e n n - z e i c h n e t , daß sie einen in einzelne Abschnitte unterteilbaren Datenspeicher besitzt, daß in den einzelnen Abschnitten Parameter einzelner der Steuerung und/oder Regelung dienender Sensoren gespeichert sind und daß sie einen Auswahlschalter aufweist, welcher zur Ansteuerung der einzelnen Abschnitte des Datenspeichers dient.

2. Steuereinheit nach Anspruch 1, d a d u r c h  g e k e n n z e i c h n e t , daß in einzelnen Abschnitten des unterteilbaren Speichers Programmpassagen zur Durchführung der Regelung und/oder Steuerung gespeichert sind.

3. Steuereinheit nach Anspruch 1 oder 2, d a d u r c h  g e k e n n z e i c h n e t , daß der Programm- und der unterteilbare Datenspeicher in einem Baustein angeordnet sind.

4. Steuereinheit nach Anspruch 3, d a d u r c h  g e k e n n z e i c h n e t , daß ein Multiplexer in den Adreßbus zwischen den Mikrocomputer und den Speicher geschaltet ist und daß der Auswahlschalter am Multiplexer angeordnet ist.

5. Steuereinheit nach einem der Ansprüche 1 bis 3, d a d u r c h   g e k e n n z e i c h n e t , daß der Auswahlschalter am Datenbus angeordnet ist.

FIG 1

FIG 2

FIG 3

0032558

3/3

FIG 4